# EUROPÄISCHE PATENTSCHRIFT

(11) **EP 3 700 320 B1**
(45) Veröffentlichungstag und Bekanntmachung des Hinweises auf die Patenterteilung: **22.03.2023**
(21) Anmeldenummer: 18785682.8
(22) Anmeldetag: 18.10.2018
(51) Int. Cl.: A01B 79/00

(54) **ERSTELLUNG DIGITALER BEARBEITUNGSKARTEN**
CREATION OF DIGITAL PROCESSING CARDS
PRODUCTION DE CARTES NUMÉRIQUES DE TRAITEMENT

(30) Priorität: 24.10.2017 EP 17198036
(43) Veröffentlichungstag der Anmeldung: 02.09.2020
(60) Teilanmeldung: 23156618.3
(73) Patentinhaber: BASF Agro Trademarks GmbH, 67056 Ludwigshafen am Rhein (DE)
(72) Erfinder: HOFFMANN, Holger, 40764 Langenfeld (DE); BITTER, Christian, 40764 Langenfeld (DE); PETERS, Ole, 40764 Langenfeld (DE); KIEPE, Bjoern, 40764 Langenfeld (DE)
(74) Vertreter: BASF IP Association
(86) Internationale Anmeldenummer: PCT/EP2018/078632
(87) Internationale Veröffentlichungsnummer: WO 2019/081349

(56) Entgegenhaltungen:
- EP-A2- 2 927 767
- WO-A1-00/23937
- WO-A1-2016/189468
- DE-A1-102013 201 996
- DE-B3-102012 010 912
- Agrosat: "Applikationskarten, teilfl?chenspezifisch und bedarfsgerecht", Baasdorf, 31. Dezember 2015 (2015-12-31), Seiten 1-4, XP055352080, Gefunden im Internet: URL:http://www.geo-konzept.de/data/produkt e/applikationskarten_vierseiter_agrosat_lr _154.pdf [gefunden am 2017-03-07]

## Beschreibung

Die vorliegende Erfindung betrifft das technische Gebiet der Präzisionslandwirtschaft. Gegenstand der vorliegenden Erfindung sind ein Verfahren, ein Computersystem und ein Computerprogrammprodukt, mit denen eine digitale Bearbeitungskarte für ein Feld erstellt wird, wobei die Bearbeitungskarte mehrere Zonen umfasst, wobei mindestens ein Merkmal mindestens einer Zone an mindestens einen Wert eines maschinellen Arbeitsparameters angepasst ist, der aus einer Bildaufnahme des Feldes gewonnen wird.

Unter dem Stichwort Präzisionslandwirtschaft (engl.: precision farming) wird eine ortsdifferenzierte und zielgerichtete Bewirtschaftung landwirtschaftlicher Nutzflächen verstanden. Ziel ist es, die Unterschiede des Bodens und der Ertragsfähigkeit innerhalb eines landwirtschaftlich genutzten Feldes zu berücksichtigen.

Zunehmend werden beispielsweise Satellitenaufnahmen ausgewertet, um Inhomogenitäten in einem landwirtschaftlich genutzten Feld zu identifizieren und die weitere Bearbeitung des Feldes an diese Inhomogenitäten anzupassen. Beispielsweise gibt es in jedem Feld begünstigte Bereiche, in denen der Ertrag höher ausfällt als in anderen (weniger begünstigten) Bereichen. Um den Ertrag in solchen begünstigten Bereichen noch zu steigern, ist es beispielsweise denkbar, dort Kulturpflanzen dichter zu pflanzen und/oder mit mehr Nährstoffen zu versorgen. Umgekehrt kann es "Problembereiche" geben, bei denen ein Einsatz von Nährstoffen und/oder Pflanzenschutzmitteln aus wirtschaftlichen Gründen nicht lohnt. Sind solche Bereiche bekannt, kann auf einen Einsatz von Nährstoffen und/oder Pflanzenschutzmitteln verzichtet werden.

Für die automatische oder semi-automatische Bearbeitung von Feldern unter Berücksichtigung teilflächenspezifischer Gegebenheiten können digitale Bearbeitungskarten genutzt werden. Eine digitale Bearbeitungskarte ist eine Repräsentation des Feldes und der verschiedenen, in dem Feld vorliegenden Bereiche sowie Informationen darüber, wie diese Bereiche zu bearbeiten sind, z.B. um einen maximalen Ertrag zu erwirtschaften. WO00/23937 beschreibt ein Beispiel zur Erzeugung einer digitalen Bearbeitungskarte. Grundlage ist eine digitale Karte eines Felds, die auf einer fotografischen Aufnahme beruht und geografische Längen- und Breitenangaben enthält, so dass eine Positionsbestimmung möglich ist. In dieser digitalen Karte kann ein Anwender Management-Zonen definieren. Den Management-Zonen kann der Anwender Formulierungen von Substanzen (Dünger, Pestizide, Herbizide) und zu applizierende Mengen dieser Substanzformulierungen zuordnen. Das Computersystem kann einen Datensatz erzeugen. Dieser Datensatz (digitale Bearbeitungskarte) ermöglicht es einem Landwirt mit Hilfe eines entsprechenden Fahrzeugs, die verschiedenen Bereiche in dem Feld, die mit den Management-Zonen der Karte korrespondieren, anzufahren und die entsprechenden Mengen an Formulierungen gemäß den vorgenommen Zuordnungen zu applizieren.

Ein weiteres Beispiel zur Erzeugung von digitalen Bearbeitungskarten ist in WO2016/032956 offenbart. In diesem Beispiel werden zusätzlich zu den aus WO00/23937 bekannten Management-Zonen so genannte "Learning Blocks" erzeugt. Mittels der Learning Blocks kann der Landwirt Variationen in der Bearbeitung des Feldes vornehmen, um zu sehen, ob sich solche Variationen positiv oder negativ auf den Ertrag auswirken. Er kann beispielsweise ausprobieren, ob eine geringere oder erhöhte Menge eines Applikationsmittels einen positiven oder einen negativen Effekt ausübt. Dazu werden Bereiche definierter Größe (Blocks) in dem Feld verteilt und diesen Blocks werden dann unterschiedliche Mengen an Applikationsmitteln zugordnet. Die Zahl der Blocks und die Variationen der Mengen an Applikationsmitteln werden so ausgewählt, dass eine statistische Analyse der Erträge Auskunft darüber gibt, ob eine bestimmte Variation günstig oder ungünstig ist. Auf diese Weise kann ein Landwirt langfristig die Bearbeitung seines Feldes optimieren und so einen maximalen Ertrag anstreben. Weitere Applikationskarten sind aus dem Artikel Agrosat: "Applikationskarten, teilflächenspezifisch und bedarfsgerecht",Baasdorf, 31. Dezember 2015 (2015-12-31), Seiten 1-4, XP055352080,Gefunden im Internet:URL:http://www.geokonzept.de/data/produkte/applikationskarten_vierseiter_agrosat_lr_154.pdf [gefunden am 2017-03-07] und dem Dokument EP 2 927 767 A2 bekannt.

Bei der Festlegung von Management-Zonen und Learning Blocks sollten das zur Verfügung stehende maschinelle Equipment und dessen Einschränkungen berücksichtigt werden. Landwirtschaftliche Bearbeitungsmaschinen weisen beispielsweise eine definierte Arbeitsbreite auf. Die Breite einer Zone und/oder eines Learning Blocks sollte nach Möglichkeit ein Vielfaches der Arbeitsbreite der landwirtschaftlichen Bearbeitungsmaschine betragen. Ferner sollten Zonen und/oder Learning Blocks entsprechend der optimalen Bewegungsrichtung (Fahrspur) der landwirtschaftlichen Bearbeitungsmaschine ausgerichtet sein.

In WO2016/032956 ist beschrieben, dass bei der Festlegung der Learning Blocks die Orientierung von Fahrspuren der Bearbeitungsmaschinen entweder manuell durch einen Nutzer vorgegeben wird oder aus früheren Pflanzpunkten ermittelt wird. Falls der Landwirt die früheren Pflanzpunkte nicht erfasst hat oder diese nicht mehr vorliegen, entfällt die zweite Möglichkeit, und der Nutzer ist gezwungen, die Orientierung manuell einzugeben. Die manuelle Eingabe ist aber fehleranfällig und aufwändig, insbesondere dann, wenn verschiedene Zonen unterschiedliche Orientierungen bei den Fahrspuren aufweisen.

Es wäre wünschenswert, wenn Werte von Arbeitsparametern von landwirtschaftlichen Bearbeitungsmaschinen bei der Erstellung von digitalen Bearbeitungskarten automatisch ermittelt und berücksichtigt werden könnten.

Dies wird durch die vorliegende Erfindung erreicht.

Ein erster Gegenstand der vorliegenden Erfindung ist ein Verfahren gemäß dem Gegenstand des Anspruchs 1.

Ein weiterer Gegenstand der vorliegenden Erfindung ist gemäß dem Gegenstand des Anspruchs 10 eine digitale Bearbeitungskarte für die landwirtschaftliche Bearbeitung eines Feldes, erhalten durch ein Verfahren gemäß einem der Ansprüche 1 bis 9.

Ein weiterer Gegenstand der vorliegenden Erfindung ist ein Computersystem gemäß dem Gegenstand des Anspruchs 11.

Ein weiterer Gegenstand der vorliegenden Erfindung ist ein Computerprogrammprodukt gemäß dem Gegenstand des Anspruchs 12.

Bevorzugte Ausführungsformen der Erfindung finden sich in den abhängigen Ansprüchen sowie in der vorliegenden Beschreibung.

Die Erfindung wird nachstehend näher erläutert, ohne zwischen den Erfindungsgegenständen (Verfahren, Computersystem, Computerprogrammprodukt) zu unterscheiden. Die nachfolgenden Erläuterungen sollen vielmehr für alle Erfindungsgegenstände in analoger Weise gelten, unabhängig davon, in welchem Kontext (Verfahren, Computersystem, Computerprogrammprodukt) sie erfolgen.

Sind in der Beschreibung oder in den Ansprüchen Schritte in einer bestimmten Reihenfolge angegeben, so bedeutet dies nicht zwangsläufig, dass die Schritte auch in der angegebenen Reihenfolge ausgeführt werden müssen. Die Erfindung soll vielmehr so verstanden werden, dass die in einer Reihenfolge aufgeführten Schritte in einer beliebigen Reihenfolge oder auch parallel zueinander ausgeführt werden können, es sei denn, ein Schritt basiert auf einem anderen Schritt, was aus der Beschreibung der Schritte jeweils deutlich wird. Die konkret in diesem Dokument aufgeführten Reihenfolgen stellen demnach nur bevorzugte Ausführungsformen der Erfindung dar.

Gemäß der vorliegenden Erfindung wird eine Bildaufnahme oder es werden mehrere Bildaufnahmen eines Feldes für Kulturpflanzen genutzt, um mindestens einen Wert von mindestens einem Arbeitsparameter für eine maschinelle Bearbeitung des Feldes zu ermitteln und diesen Wert in die Erstellung einer digitalen Bearbeitungskarte einzubringen.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, mit Nährstoffen versorgt und geerntet werden. In einem Feld kann eine einzelne Sorte einer Kulturpflanze angebaut werden; es können aber auch verschiedene Sorten einer Kulturpflanze und/oder verschiedene Kulturpflanzen angebaut werden. Es ist auch denkbar, dass ein Feld einen Bereich oder mehrere Bereiche umfasst, in dem/denen keine Kulturpflanzen angebaut sind und/oder angebaut werden.

Unter dem Begriff "Bildaufnahme" wird eine Abbildung eines Feldes oder eines Bereichs eines Feldes verstanden. Die Abbildung ist üblicherweise zweidimensional; denkbar ist aber auch eine dreidimensionale Abbildung.

Bei der Bildaufnahme handelt es sich üblicherweise um eine digitale Bildaufnahme; grundsätzlich ist aber auch die Verwendung analoger Bildaufnahmen denkbar.

Der Begriff "digital" bedeutet, dass die Bildaufnahme über diskrete Bildpunkte verfügt und in einer Form vorliegt, in der sie einer maschinellen Verarbeitung, meist durch ein Computersystem, zugeführt werden kann. Um den Speicherbedarf gering zu halten, ist es üblich, dass die digitale Bildaufnahme binär kodiert und optional komprimiert ist.

Unter "maschineller Verarbeitung" werden die bekannten Verfahren zur elektronischen Datenverarbeitung (EDV) verstanden.

Die im Rahmen der vorliegenden Erfindung genutzten Bildaufnahmen zeigen ein Feld oder einen Teil eines Feldes üblicherweise in einer Aufsicht. Sie werden üblicherweise mit Hilfe eines oder mehrerer Fernerkundungssensoren erzeugt; es handelt sich bei einer digitalen Bildaufnahme somit beispielsweise um Fernerkundungsdaten.

"Fernerkundungsdaten" sind digitale Informationen, die aus der Ferne beispielsweise durch Satelliten von der Erdoberfläche gewonnen wurden. Auch der Einsatz von Luftfahrzeugen (unbemannt (Drohnen) oder bemannt) zur Aufnahme von Fernerkundungsdaten ist denkbar.

In einem ersten Schritt des erfindungsgemäßen Verfahrens wird mindestens eine Bildaufnahme eines Feldes für Kulturpflanzen bereitgestellt.

Die Bildaufnahmen können beispielsweise aus öffentlich zugänglichen oder kommerziellen Datenbanken bezogen werden. Es gibt eine Reihe von Anbietern von Fernerkundungsdaten verschiedener Verarbeitungsstufen. Üblicherweise wird zunächst auf Basis der Geokoordinaten eines zu betrachtenden Feldes mindestens eine digitale Bildaufnahme, die das Feld oder einen Teil des Feldes zu einem Zeitpunkt in der Vergangenheit zeigt, aus einer Datenbank auf das erfindungsgemäße Computersystem zum Beispiel über das Internet geladen.

Denkbar ist auch, dass die Bildaufnahme als Luftaufnahme durch ein bemanntes oder unbemanntes (Drohne) Luftfahrzeug erzeugt wird.

Vorzugsweise werden Satellitenaufnahmen von der Erdoberfläche verwendet.

Die erfindungsgemäß genutzten Bildaufnahmen enthalten Merkmale, die von einer vergangenen Bearbeitung des Feldes stammen. In einem weiteren Schritt des erfindungsgemäßen Verfahrens wird die mindestens eine Bildaufnahme analysiert, um solche Bearbeitungsmerkmale zu identifizieren.

Dabei kann zur Anfertigung der Bildaufnahmen ein beliebiger Kontrastmechanismus zum Einsatz kommen, der irgendeine Art Rückschluss darauf zulässt, wie das Feld in der Vergangenheit bearbeitet wurde. So kann die Bearbeitung beispielsweise topographische Spuren, wie etwa Furchen, auf dem Feld hinterlassen, die dann beispielsweise sichtbares Licht anders reflektieren und in einem optischen Bild des Feldes einen Kontrast verursachen. Die Bearbeitung kann aber auch beispielsweise die Vegetationsdichte, die Feuchte des Bodens oder andere Parameter verändern, wodurch wiederum die Lichtemission des Feldes in anderen Wellenlängenbereichen verändert werden kann, wie beispielsweise im infraroten Spektrum.

Dabei ist das Verfahren auch grundsätzlich nicht darauf beschränkt, dass die Bildaufnahme durch Fernerkundung erfolgen muss. Eine optische Bildaufnahme kann beispielsweise auch mit einem Smartphone erfolgen, wobei auch beispielsweise Smartphones, die zusätzlich eine Infrarotkamera aufweisen, verwendet werden können. Das Verfahren kann dann auch ohne Rückgriff auf entsprechende externe Datenquellen für Bildaufnahmen durchgeführt werden, beispielsweise wenn am Ort des Feldes nur eine schmalbandige oder gar keine Netzwerkanbindung zur Verfügung steht.

Der Begriff der Bildaufnahme ist weiterhin auch nicht dahingehend einschränkend zu verstehen, dass Licht aus einem bestimmten Raumgebiet durch ein optisches System auf einen analogen oder digitalen, beispielsweise in Pixel unterteilten, Bildsensor projiziert wird. Vielmehr kann das Feld beispielsweise auch sukzessive mit einem Laserstrahl abgerastert werden. Es kann dann an jedem Punkt des Rasters die Wirkung des Feldes auf den Laserstrahl untersucht und in der Bildaufnahme diesem Punkt zugeschrieben werden, beispielsweise in Form eines Grauwerts.

Der für die Bildaufnahme verwendete Kontrastmechanismus ist weiterhin nicht darauf beschränkt, dass er physikalisch auf dem Feld selbst, d.h. am Boden, wirkt. Vielmehr kann beispielsweise auch die Bearbeitung des Feldes eine Wirkung auf die darüber befindliche Atmosphäre haben, die dann wiederum durch Fernerkundung gemessen werden kann. Beispielsweise können entsprechend der jeweiligen lokalen Beschaffenheit des Feldes unterschiedliche Mengen an Feuchtigkeit in die Atmosphäre entlassen werden, oder ein geänderter Reflexionskoeffizient für Sonnenlicht kann zu einer lokal anderen Erwärmung der Atmosphäre führen, was dann jeweils durch Fernerkundung festgestellt werden kann.

Die Analyse der mindestens einen Bildaufnahme erfolgt vorzugsweise durch das erfindungsgemäße Computersystem/Computerprogramm. Zur Bildanalyse können gängige Verfahren zur Mustererkennung eingesetzt werden. Denkbar sind auch Methoden des maschinellen Lernens wie z.B. der Einsatz von künstlichen neuronalen Netzen. Bei der Bildanalyse gilt es, Merkmale in der Bildaufnahme zu identifizieren, die von einer früheren Bearbeitung des Feldes herrühren.

Für das Analysieren der Bildaufnahme können beliebige Methoden des maschinellen Sehens verwendet werden. Beispielsweise kann die Bildaufnahme durch ein künstliches neuronales Netzwerk oder ein anderes KI-Modul dahingehend klassifiziert werden, ob hierin bestimmte Arten von Bearbeitungsspuren enthalten sind. Wenn es sich um Bearbeitungsmerkmale handelt, die quantitativ mehr oder weniger stark ausgeprägt sein können, so kann der Grad dieser Ausprägung auch beispielsweise durch eine Regressionsanalyse ermittelt werden.

Typische Bearbeitungsmerkmale sind: Feldgrenzen, Fahrspuren, Fahrgassen, Vorgewende, Ackerrandstreifen, Pflugstreifen, Blühstreifen, Zufahrtswege, Pflanzabstände, Drainagen wie z.B. Be- und/oder Entwässerungskanäle, Zäune, Begrenzungen, Mittel zum Schutz vor Bodenerosion (wie z.B. Gehölze) und dergleichen. Insbesondere können alle Bearbeitungsmerkmale aus dieser Liste ausgewählt sein. Wie zuvor angedeutet, ist der Begriff des Bearbeitungsmerkmals jedoch nicht auf derartige topographisch sichtbare Merkmale beschränkt, sondern kann beispielsweise auch eine Änderung der Feuchtigkeit, der Vegetationsdichte oder auch der chemischen Zusammensetzung des Bodens umfassen.

Als "Fahrgasse" bezeichnet man den Teil des Ackers, der während des Wachstums der Kulturpflanze wiederholt für Pflegemaßnahmen befahren wird. Meist werden die Streifen, in denen gefahren wird, nicht eingesät, um Saatgut zu sparen. Fahrgassen werden üblicherweise parallel im Abstand von 12 bis 36 Metern angelegt. Dies hängt vor allem von den im Betrieb vorhandenen Geräten ab. Insbesondere Feldspritzen und Düngerstreuer geben über ihre Arbeitsbreiten den Abstand der Fahrgassen zueinander vor. Üblicherweise wird beim Säen mit halbem Fahrgassenabstand (also 6-18 Metern je nach Betrieb, siehe oben) vom Rand aus begonnen. Dabei wird auch auf dem Vorgewende eine Fahrgasse angelegt. Anschließend werden parallel zur längeren Feldseite die übrigen Spuren im Abstand der vollen Fahrgassenbreite zueinander angelegt.

Besonders vorteilhaft stimmt mindestens eine Grenze einer Zone mit mindestens einem Teil einer Grenze einer Fahrgasse überein. Dadurch wird bewirkt, dass die Fahrgasse nicht durch die Bearbeitungsmaschine bearbeitet wird. Verbrauchsmaterial, wie etwa Saatgut, Nährmittel oder Pflanzenschutzmittel, kommt in der Fahrgasse dem Wachstum von Kulturpflanzen nicht zu Gute. Durch das Aufbringen von Wasser oder gar durch ein Umpflügen könnte sogar die Benutzbarkeit der Fahrgasse beeinträchtigt werden.

Als "Vorgewende" wird im Ackerbau der randliche Bereich eines Feldes bezeichnet, auf dem bei der Bearbeitung, beispielsweise mit dem Traktor beim Pflügen, gewendet wird. Bei der üblichen streifenförmigen Bearbeitung weist ein Feld also an zwei gegenüberliegenden Seiten je ein Vorgewende auf. Dies sind zumeist die beiden kürzeren Seiten, da Längsbearbeitung insgesamt mit weniger Wendevorgängen verbunden und dadurch wirtschaftlicher ist. Bearbeitet werden Vorgewendeflächen quer zur sonstigen Bearbeitungsrichtung und parallel zum Ackerrand und je nach Vorgang vor (Ernte, Maislegen) oder nach (normale Bestellung) dem Bearbeiten der Hauptparzelle.

Ein "Ackerrandstreifen" ist ein Randbereich an Äckern, der ohne den Einsatz von Pflanzenschutzmitteln bewirtschaftet wird, damit sich dort Ackerwildkräuter ausbreiten können. Im Unterschied zu "Blühstreifen", die im Frühjahr mit einer Blühmischung angesät werden, ist das Ziel der Ackerrandstreifen die Förderung der am Standort bodenbürtigen Ackerwildkräuter (Segetalpflanzen).

Die Bearbeitungsmerkmale zeigen demnach, wie das Feld in der Vergangenheit bearbeitet worden ist und wie das Feld demnach auch in Zukunft bearbeitet werden könnte. In einem weiteren Schritt wird unter Heranziehung der identifizierten Bearbeitungsmerkmale, insbesondere aus den identifizierten Bearbeitungsmerkmalen, mindestens ein Wert für mindestens einen Arbeitsparameter ermittelt. Die Ermittlung erfolgt vorzugsweise durch das erfindungsgemäße Computersystem/Computerprogramm.

Ein Arbeitsparameter bestimmt, wie eine landwirtschaftliche Bearbeitungsmaschine auf dem Feld eingesetzt wird. Hierunter ist beispielsweise ein Programm für die Bewegung der Bearbeitungsmaschine in Ort und/oder Zeit zu verstehen, aber auch beispielsweise ein Programm für die Art oder Intensität von durch die Maschine durchgeführten Bearbeitungsmaßnahmen, wie Pflügen oder Einbringen beliebiger Substanzen, in Ort und/oder Zeit.

Der Begriff "landwirtschaftliche Bearbeitungsmaschine" umfasst jede Vorrichtung, die sich über oder durch ein Feld bewegt oder bewegt wird und dabei eine landwirtschaftliche Maßnahme ausführt.

Beispiele für landwirtschaftliche Bearbeitungsmaschinen sind z.B. Düngerstreuer, Mähmaschine, Mulcher, Pflanzmaschine, Pflug, Sämaschine, Feldspritze und dergleichen (siehe z.B. auch http://www.wikiwand.com/de/Listelandwirtschaftlicher_Geräte_und_Maschinen).

Unter dem Begriff "landwirtschaftliche Maßnahme" wird jede Maßnahme in dem Feld für Kulturpflanzen verstanden, die nötig und/oder wirtschaftlich und/oder ökologisch sinnvoll ist, um ein pflanzliches Erzeugnis zu gewinnen. Beispiele für landwirtschaftliche Maßnahmen sind: Bodenbearbeitung (z.B. Pflügen), Ausbringen des Saatguts (Aussaat), Bewässerung, Entfernen von Unkräutern/Ungräsern, Düngen, Bekämpfen von Schadorganismen, Ausbringen von Pflanzenschutzmitteln, Ernten und dergleichen.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler). Beispiele für Pflanzenschutzmittel sind Herbizide, Fungizide und Pestizide (z.B. Insektizide).

Einige der Werte für Arbeitsparameter werden durch die zur Verfügung stehenden landwirtschaftlichen Bearbeitungsmaschinen festgelegt, wie beispielsweise die Spurbreite; andere sind variabel, und können somit optimiert werden, wie beispielsweise die Fahrtrouten und Fahrtrichtungen. Zu den erfindungsgemäß betrachteten Arbeitsparametern zählen insbesondere diejenigen, die einen Einfluss auf die Ausdehnung und/oder Form und/oder Ausrichtung und/oder Lage eines Bereiches ausüben, der von einer landwirtschaftlichen Bearbeitungsmaschine bearbeitet wird, insbesondere Fahrtrouten, Fahrtrichtungen, Spurbreiten, Arbeitsbreiten, Pflanzabstände und dergleichen. Diese Arbeitsparameter haben gemeinsam, dass sie während der laufenden Bearbeitung des Feldes mit der Bearbeitungsmaschine nicht oder nur schwer angepasst werden können.

Zu den verfügbaren Arbeitsparametern zählen jedoch auch beispielsweise die Fahrgeschwindigkeit, die Eindringtiefe oder ein Anpressdruck eines Pflugs, und/oder eine Ausbringrate für ein Saatgut, für ein Nährmittel, für ein Düngemittel, für einen Pflanzenschutzmittel oder für Wasser, wobei diese Arbeitsparameter jedoch vergleichsweise schnell auch während der laufenden Bearbeitung variiert werden können.

In einem weiteren Schritt des erfindungsgemäßen Verfahrens wird eine digitale Bearbeitungskarte für das Feld erstellt. Die digitale Bearbeitungskarte ist eine digitale Repräsentation des Feldes oder eines Teils des Feldes. Sie weist geografische Lageinformationen auf, die beispielsweise mit Hilfe eines Positionsbestimmungssystems abgeglichen werden können, um eine landwirtschaftliche Bearbeitungsmaschine in dem Feld auf Basis der Bearbeitungskarte navigieren zu können. Geeignete Positionsbestimmungssysteme werden oft unter dem Begriff GPS (Global Positioning System) zusammengefasst.

Die digitale Bearbeitungskarte weist eine Mehrzahl an Zonen auf. Das bedeutet, dass das Feld oder der Teil des Feldes, das/der durch die Bearbeitungskarte repräsentiert wird, in mehrere Bereiche unterteilt ist, die mit den Zonen korrespondieren. Eine Zone ist üblicherweise dadurch gekennzeichnet, dass der Bereich des Feldes, den die Zone repräsentiert, relativ homogen in Bezug auf einen oder mehrere Ertragsfaktoren ist, die den Ertrag des Bereichs beeinflussen. Die Zonen werden oftmals so definiert, dass der mindestens eine Ertragsfaktor innerhalb der Zone weniger variiert als zwischen zwei verschiedenen Zonen. Eine Zone ist dadurch gekennzeichnet, dass der Bereich des Feldes, den die Zone repräsentiert, einheitlich landwirtschaftlich bearbeitet werden soll, während beim Übergang von einer Zone zu einer anderen Zone wenigstens ein Wert eines Arbeitsparameters der landwirtschaftlichen Bearbeitungsmaschine geändert werden soll. Beispielsweise ist denkbar, dass verschiedenen Zonen unterschiedliche Mengen oder Konzentrationen eines zu applizierenden Pflanzenschutzmittels oder unterschiedliche Mengen an Nährstoffen oder unterschiedliche Zusammensetzungen von Applikationsmitteln oder unterschiedliche Bearbeitungsmethoden oder unterschiedliche Mengen an Wasser zur Bewässerung oder dergleichen zugeordnet sind / werden sollen.

Bei den Zonen kann es sich um "klassische" Management-Zonen handeln, wie sie beispielsweise in WO00/23937 beschrieben sind. Es kann sich auch um Learning Blocks handeln, wie sie beispielsweise in WO2016/032956 offenbart sind.

Bei der Festlegung der Zonen wird nun dem mindestens einen ermittelten Wert des mindestens einen Arbeitsparameters Rechnung getragen, indem mindestens ein Merkmal mindestens einer Zone an den mindestens einen ermittelten Werte für den mindestens einen Arbeitsparameter angepasst wird.

Merkmale einer Zone sind beispielsweise: die Lage, die Ausdehnung, die Größe, die Form, die Ausrichtung und dergleichen.

Wie bereits beschrieben repräsentiert eine Zone in der digitalen Bearbeitungskarte einen Bereich eines Feldes in der realen Welt. Anders ausgedrückt korrespondiert eine Zone in der digitalen Bearbeitungskarte mit einem Bereich im Feld. Dementsprechend korrespondiert die Lage der Zone in der Bearbeitungskarte mit der geografischen Lage des korrespondierenden Bereichs im Feld.

Die identifizierten Bearbeitungsmerkmale geben Aufschluss darüber, wie das Feld in der Vergangenheit maschinell bearbeitet worden ist. Diese maschinelle Bearbeitung verkörpert das Erfahrungswissen derjenigen Personen, die diese Bearbeitung bislang festgelegt bzw. gesteuert haben. Dieses Wissen ist häufig nicht schriftlich niedergelegt und auch nur schwer für eine solche Niederlegung in Worte fassbar. Somit ist es häufig allein in den Köpfen der handelnden Personen gespeichert. Indem die Bearbeitungsmerkmale nun in die Festlegung von Arbeitsparametern eingehen, kann das Erfahrungswissen erfasst und niedergelegt werden. Damit kann sichergestellt werden, dass das Erfahrungswissen nicht verloren geht, wenn die bislang handelnden Personen beispielsweise versterben oder den Arbeitgeber wechseln. Insbesondere wird es erleichtert, die Bearbeitung des Feldes von einer Person auf eine andere zu übergeben, beispielsweise bei einem Generationenwechsel. Die Bearbeitung des Feldes kann reproduzierbar nach Maßgabe des besagten Erfahrungswissens fortgeführt werden, indem das Feld maschinell nach Maßgabe der Arbeitsparameter bearbeitet wird, die wiederum unter Heranziehung der Bearbeitungsmerkmale ermittelt wurden.

Selbst wenn die Bearbeitung des Feldes nicht von einer Person zur anderen wechselt, wird bereits die Reproduzierbarkeit der maschinellen Bearbeitung gesteigert. Bislang wurden viele für die landwirtschaftliche Bearbeitung verwendete Maschinen manuell bedient. Dabei wurde für viele Arbeitsparameter weder ein a priori festgelegtes Zeitprogramm abgefahren noch war ein durch die manuelle Betätigung tatsächlich gefahrenes Zeitprogramm für die erneute Verwendung erfassbar. Eine einmal erstellte digitale Bearbeitungskarte kann hingegen immer wieder verwendet werden.

Die Heranziehung von Bearbeitungsparametern für die Ermittlung von Arbeitsparametern kann sich auch auf eine zeitliche Vorgeschichte von Bearbeitungsparametern erstrecken. So ist es beispielsweise in der Landwirtschaft zur Verhinderung einer Auslaugung von Böden häufig sinnvoll, verschiedene Kulturpflanzen in einer bestimmten Fruchtfolge anzubauen. Dementsprechend kann eine Vorgeschichte von mehreren, auf ein und demselben Bereich des Feldes nacheinander ausgeführten Bearbeitungen für die Bestimmung von Arbeitsparametern für eine künftige Bearbeitung relevant sein.

Wie zuvor erläutert, hängt das konkret bei der maschinellen Bearbeitung eines Feldes gefahrene Zeitprogramm der Arbeitsparameter nicht allein von den biologischen Gegebenheiten des Feldes selbst ab, wie beispielsweise von Inhomogenitäten in der Beschaffenheit des Bodens. Vielmehr sind viele Arbeitsparameter auch an konkret verwendete Maschinen gebunden. Wenn bei der Bearbeitung des Feldes von einer bislang verwendeten Maschine zu einer neuen Maschine gewechselt wird, die beispielsweise eine größere Arbeitsbreite hat oder ein Spritzmittel mit einer anderen räumlichen Verteilung ausstößt, so sind die Arbeitsparameter an die neue Maschine anzupassen. Wenn Arbeitsparameter unter Heranziehung der Bearbeitungsmerkmale automatisiert ermittelt werden, kann auch die Anpassung an eine neue Maschine auf dem gleichen Wege erfolgen. Damit entfällt eine Notwendigkeit, durch manuelles Ausprobieren die Arbeitsparameter an das veränderte Verhalten der neuen Maschine anzupassen.

Die einmal ermittelten Arbeitsparameter müssen für die weitere Bearbeitung des Feldes nicht unverändert bleiben. Vielmehr ist es beispielsweise auch möglich, diese Arbeitsparameter als Ausgangspunkt für eine rechnergestützte Optimierung zu verwenden. Es kann also beispielsweise in Form der Bearbeitungsmerkmale das bisherige Erfahrungswissen gleichsam eingelesen werden, und es können anschließend aufbauend hierauf Arbeitsparameter ermittelt werden, die nicht nur die bisherige Bearbeitung mehr oder weniger genau reproduzieren, sondern im Vergleich hierzu einen Mehrwert bieten. Die optimierten Arbeitsparameter können beispielsweise die Bearbeitung beschleunigen, den erzielten Ertrag der Kulturpflanzen verbessern oder den Einsatz von Verbrauchsmaterialien, wie Nährstoffen, Dünger oder Spritzmitteln, minimieren.

Bei der Festlegung der Arbeitsparameter für die digitale Bearbeitungskarte können darüber hinaus beliebige weitere Zusatzinformationen herangezogen werden, sofern diese verfügbar sind. Beispielsweise kann aus Bildaufnahmen oder anderen Messungen die Dichte von Kulturpflanzen oder von Unkrautbefall analysiert werden. Es können auch beispielsweise Daten über die Beschaffenheit des Bodens, wie etwa eine aus Messungen ermittelte räumlich inhomogene Verteilung der Zusammensetzung oder der Feuchtigkeit, herangezogen werden.

Somit sind auch die Zonen zu unterscheiden von in der Bildaufnahme zu erkennenden zusammenhängenden Bereichen, die in der Vergangenheit in ähnlicher Weise bearbeitet wurden. Insbesondere in dem beschriebenen Fall, in dem das Feld künftig mit anderen Bearbeitungsmaschinen bearbeitet werden soll als bisher, kann die digitale Bearbeitungskarte durchaus eine völlig neue Unterteilung des Feldes in Zonen zum Ergebnis haben.

Je nach Form der Zone können die Koordinaten von einer unterschiedlichen Anzahl von Punkten erforderlich sein, um die Lage der Zone in der Bearbeitungskarte (und damit die Lage des korrespondierenden Bereichs im Feld) eindeutig festzulegen. Bei einer zweidimensionalen Bearbeitungskarte und einer viereckigen Zone mit ansonsten geraden (nicht gekrümmten) Kanten reichen beispielsweise die Koordinaten der vier Ecken aus, um die Lage der Zone eindeutig festzulegen.

Die Ausdehnung der Zone in der Bearbeitungskarte korrespondiert mit der Ausdehnung des korrespondierenden Bereichs im Feld. Unter Ausdehnung ist die Ausdehnung in mindestens einer Richtung zu verstehen. Die Ausdehnung kann zum Beispiel die Länge oder die Breite der Zone sein. Die Ausdehnung kann aber auch die maximale Ausdehnung oder die minimale Ausdehnung sein. Vorzugsweise handelt es sich bei der Ausdehnung um die Ausdehnung senkrecht zur Bearbeitungsrichtung des korrespondierenden Bereichs. Die Bearbeitungsrichtung ist diejenige Richtung, in die sich eine landwirtschaftliche Bearbeitungsmaschine bewegt oder bewegt wird, wenn sie eine landwirtschaftliche Maßnahme in dem korrespondierenden Bereich ausübt.

Die Größe der Zone in der Bearbeitungskarte korrespondiert mit der Größe des korrespondierenden Bereichs im Feld, wobei unter Größe üblicherweise der Flächeninhalt verstanden wird.

Bezüglich der Größe der Zonen gibt es ein Optimum. Je kleiner die einzelnen Zonen gewählt werden, desto genauer kann die räumliche Verteilung der bei der tatsächlichen Bearbeitung des Feldes mit der Bearbeitungsmaschine an eine zuvor ermittelte Soll-Verteilung angepasst werden. Je größer andererseits die einzelnen Zonen gewählt werden, desto schneller lässt sich das Feld insgesamt bearbeiten.

Die rechnergestützte Optimierung der digitalen Bearbeitungskarte, d.h., die Gewinnung einer räumlichen Soll-Verteilung eines oder mehrerer Arbeitsparameter über die Fläche des Feldes unter Nutzung des zuvor durch Analyse der Bildaufnahme eingelesenen, in den Bearbeitungsmerkmalen verkörperten Erfahrungswissens, kann in verschiedener Weise erfolgen. Die Optimierungsmethode kann sich insbesondere danach richten, welcher Stellenwert dem besagten Erfahrungswissen beigemessen wird.

Die Zielvorgabe für die Optimierung kann insbesondere eine Gütefunktion beinhalten, welche für jede der zu optimierenden Eigenschaften einen Term enthält, wobei diese Terme untereinander gewichtet sind, wie beispielsweise in Form einer gewichteten Summe. Die zu optimierenden Eigenschaften können beispielsweise einen Gesamtertrag des Feldes, einen Zeitbedarf für die Bearbeitung des kompletten Feldes sowie einen oder mehrere Verbräuche von Saatgut, Wasser, Düngemittel, Nährmittel, Pflanzenschutzmittel oder Saatgut sein. Die Gütefunktion kann auch durch Randbedingungen beschränkt sein, wie beispielsweise Umweltauflagen für eine maximale Belastung des Bodens mit Düngemittel oder Pflanzenschutzmittel oder für einen maximalen Wasserverbrauch. Die Terme in der Gütefunktion können unabhängig voneinander sein oder auch miteinander wechselwirken.

Beispielsweise können die Gewichte in der Gütefunktion ganz oder teilweise aus den Bearbeitungsmerkmalen ermittelt werden, die aus der Analyse der Bildaufnahme erhalten werden. Die ermittelten Bearbeitungsmerkmale können jedoch auch beispielsweise herangezogen werden, um Startwerte für diejenigen Arbeitsparameter zu ermitteln, die Gegenstand der Optimierung sind.

Es kann jedoch auch ein Ziel der Optimierung sein, dass bestimmte der auf Grund der Bildanalyse festgestellten Bearbeitungsmerkmale erhalten bleiben, wenn das Feld künftig gemäß der neuen digitalen Bearbeitungskarte bearbeitet wird. Die Gütefunktion kann dann beispielsweise einen Term beinhalten, der eine Änderung dieser Bearbeitungsmerkmale bestraft. Hierhinter steckt die Motivation, das Erfahrungswissen, mit dem in der Vergangenheit Erfolge erzielt werden konnten, nicht völlig über Bord zu werfen.

Die Form der Zone in der Bearbeitungskarte korrespondiert mit der Form des korrespondierenden Bereichs im Feld. Eine Zone ist üblicherweise eine Fläche. Die Fläche kann n-eckig sein, wobei n eine ganze Zahl ist, die größer als zwei ist (z.B. dreieckig, viereckig, fünfeckig usw.); sie kann rechteckig, quadratisch, trapezförmig, rautenförmig, rund, oval, elliptisch sein oder eine andere beliebige Form aufweisen. Vorzugsweise weist die Fläche eine Form auf, bei der zwei Seiten in einem konstanten Abstand parallel zueinander verlaufen. Vorzugsweise ist die Fläche rechteckig, rautenförmig, trapezförmig oder weist die Form eines Parallelogramms auf.

Die Ausrichtung der Zone in der Bearbeitungskarte korrespondiert mit der Ausrichtung des korrespondierenden Bereichs im Feld. Unter Ausrichtung wird die Orientierung von zwei parallel zueinander verlaufenden Seiten einer flächigen Zone verstanden. Die Orientierung gibt die Richtungen an (z.B. in Form der Himmelsrichtungen), in denen sich die parallel laufenden Seiten erstrecken. Die Ausrichtung entspricht üblicherweise der Bearbeitungsrichtung (während die Ausdehnung senkrecht dazu liegt).

Erfindungsgemäß wird also mindestens ein Merkmal mindestens einer Zone an mindestens einen ermittelten Wert für mindestens einen Arbeitsparameter angepasst. Unter "Anpassung" wird verstanden, dass der ermittelte Wert verwendet wird, um das Merkmal festzulegen.

Zum Beispiel ist es denkbar, die Grenzen einer Zone mit Grenzen von Fahrspuren zusammenfallen zu lassen.

Üblicherweise wird das Merkmal aus dem Wert oder mit Hilfe des Werts errechnet. Zum Beispiel ist es denkbar, die Ausdehnung einer Zone in einer Richtung, wie beispielsweise senkrecht zu einer Bearbeitungsrichtung, auf ein Vielfaches, insbesondere ein ganzzahliges Vielfaches, der Arbeitsbreite einer landwirtschaftlichen Bearbeitungsmaschine festzusetzen. Auf diese Weise wird die Arbeitskapazität der Bearbeitungsmaschine optimal ausgenutzt, denn die Zone kann dann in überlappungsfreien Bahnen von der Bearbeitungsmaschine bearbeitet werden, ohne dass ein Bereich der Zone unbearbeitet bleibt.

Zu dieser optimalen Ausnutzung kann es weiterhin vorteilhaft beitragen, wenn zwei parallel zueinander verlaufende Grenzen der mindestens eine Zone parallel zu einer Bearbeitungsrichtung einer landwirtschaftlichen Bearbeitungsmaschine verlaufen.

Die erstellte digitale Bearbeitungskarte kann sich ein Nutzer auf einem Bildschirm anzeigen lassen oder er kann sie auf ein Speichermedium oder ein mobiles Computersystem (z.B. ein Tabletcomputer oder ein Smartphone) herunterladen. Denkbar ist auch, dass die digitale Bearbeitungskarte auf ein Computersystem übertragen wird, das ein Bestandteil einer landwirtschaftlichen Bearbeitungsmaschine ist. Wird eine landwirtschaftliche Bearbeitungsmaschine, die über ein Positionsbestimmungssystem verfügt, über ein Feld oder durch ein Feld bewegt (oder bewegt sie sich autonom), kann die tatsächliche Position mit den Lageinformationen der digitalen Bearbeitungskarte abgeglichen werden, um zu ermitteln, in welcher Zone sich die landwirtschaftliche Bearbeitungsmaschine gerade befindet. Üblicherweise werden die Zonen (bzw. die korrespondierenden Bereiche im Feld) unterschiedlich bearbeitet. In der Bearbeitungskarte sind üblicherweise Arbeitsanweisungen hinterlegt. Bei Überschreitung einer Zonengrenze wird vorzugsweise ein Arbeitsparameter entsprechend den Arbeitsanweisungen eingestellt/geändert.

Das erfindungsgemäße Verfahren kann ganz oder teilweise auf einem Computersystem (z.B. dem erfindungsgemäßen Computersystem) ausgeführt werden.

Ein Computersystem umfasst einen oder mehrere Computer. Unter dem Begriff Computer wird ein universell programmgesteuerter Automat zur Informationsverarbeitung verstanden. Ein Computer verfügt über mindestens eine Eingabeeinheit, über die Daten und Steuerbefehle eingegeben werden können (Maus, Trackpad, Tastatur, Scanner, Webcam, Joystick, Mikrofon, Barcodeleser usw.), eine Verarbeitungseinheit umfassend Arbeitsspeicher und Prozessor, mit der Daten und Befehle verarbeitet werden, und eine Ausgabeneinheit, um Daten aus dem System zu senden (z.B. Bildschirm, Drucker, Lautsprecher usw.). Heutige Computer werden oft in Desktop-Computer, Portable Computer, Laptops, Notebooks, Netbooks und Tablet-Computer und so genannte Handhelds (z.B. Smartphones, Smartwatches) unterteilt. Unter den Begriff des Computers fallen aber auch beispielsweise Embedded-Systeme, wie sie in modernen landwirtschaftlichen Bearbeitungsmaschinen zum Einsatz kommen.

Der Begriff des Computersystems soll jedoch nicht implizieren, dass sich alle Komponenten dieses Systems an einem Ort befinden. So können sich beispielsweise auch verschiedene Teile der Verarbeitungseinheit auf verschiedenen physischen Computern an verschiedenen Orten befinden. So kann beispielsweise die Analyse der Bildaufnahme auf einem externen Server eines Anbieters stattfinden, der auf die Beschaffung derartiger Bildaufnahmen und ihre Analyse nach beliebigen Merkmalen spezialisiert ist. An der Übersetzung von Bearbeitungsmerkmalen in Arbeitsparameter kann sich beispielsweise ein Hersteller von Bearbeitungsmaschinen beteiligen, der bezüglich der Information, wie sich Änderungen von Arbeitsparametern auf das Bearbeitungsergebnis auswirken, an der Quelle sitzt.

Das erfindungsgemäße Computersystem umfasst eine Empfangseinheit zum Empfang einer Bildaufnahme eines Feldes für Kulturpflanzen. Üblicherweise ist das erfindungsgemäße Computersystem über ein Netzwerk (z.B. das Internet) mit einer Datenbank verbunden. Das erfindungsgemäße Computersystem ist dann so konfiguriert, dass es Bildaufnahmen von einem Feld oder von einem Teil eines Feldes aus der Datenbank abrufen und in einen Arbeitsspeicher des erfindungsgemäßen Computersystems einlesen kann oder um es auf einen Datenspeicher (z.B. eine Festplatte) des erfindungsgemäßen Computersystems abzulegen. Denkbar ist auch, dass ein Nutzer des erfindungsgemäßen Computersystems eine Bildaufnahme auf einem separaten Datenspeicher (z.B. einem USB-Speicherstick) bereithält und diesen mit dem erfindungsgemäßen Computersystem über eine Schnittstelle (z.B. über die USB-Schnittstelle) verbindet, um die Bildaufnahme auf das erfindungsgemäße Computersystem zu übertragen.

Das erfindungsgemäße Computersystem umfasst ferner eine Verarbeitungseinheit, die so konfiguriert ist, dass sie die Bildaufnahme analysiert und Bearbeitungsmerkmale identifiziert, die Aufschluss darüber geben, wie das Feld in der Vergangenheit maschinell bearbeitet worden ist, aus den Bearbeitungsmerkmalen mindestens einen Wert für mindestens einen Arbeitsparameter ermittelt, und eine digitale Bearbeitungskarte für das Feld erstellt, wobei die Bearbeitungskarte mehrere Zonen umfasst, wobei mindestens ein Merkmal mindestens einer Zone an den mindestens einen ermittelten Werte für den mindestens einen Arbeitsparameter angepasst ist.

Das erfindungsgemäße Computersystem weist üblicherweise eine Anzeigeeinheit (z.B. einen Bildschirm) auf, damit ein Nutzer die Schritte, die das Computersystem ausübt, steuern und überprüfen und/oder sich die digitale Bildaufnahme und/oder die digitale Bearbeitungskarte anzeigen lassen kann.

Das erfindungsgemäße Computersystem weist üblicherweise eine Ausgabeeinheit auf, mit der eine digitale Bearbeitungskarte auf ein anderes Computersystem und/oder eine Speichereinheit übertragen werden kann.

Nachfolgend wird die Erfindung anhand von Beispielen und Abbildungen näher beschrieben, ohne die Erfindung jedoch auf die in den Beispielen genannten Merkmale bzw. Kombinationen von Merkmalen reduzieren zu wollen.

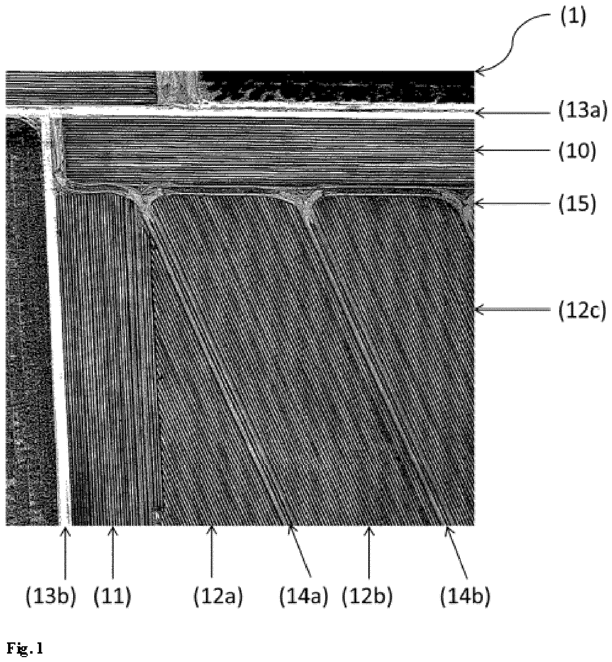

Fig. 1 zeigt eine Satellitenaufnahme (1) eines Teiles eines Feldes in einer Aufsicht. Die Satellitenaufnahme ist in einer schwarz-weiß-Darstellung gezeigt.

Es sind eine Vielzahl von Bearbeitungsmerkmalen zu erkennen, die anzeigen, wie das Feld in der Vergangenheit bearbeitet worden ist.

Der gezeigte Teil des Feldes lässt sich in drei Bereiche unterteilen, die sich durch verschiedene Bearbeitungsrichtungen voneinander abgrenzen. Ein erster Bereich (10) weist horizontale Linien auf, die darauf hinweisen, dass dieser Bereich von links nach rechts und/oder von rechts nach links entlang der Linien bearbeitet worden ist. Die Linien, ihre Ausrichtung, ihr Abstand voneinander und ihre Anzahl stellen Bearbeitungsmerkmale dar, die mittels Bildanalyse identifiziert werden können.

Ein zweiter Bereich (11) weist vertikale Linien auf, die darauf hinweisen, dass dieser Bereich von oben nach unten und/oder von unten nach oben bearbeitet worden ist. Die Linien, ihre Ausrichtung, ihr Abstand voneinander und ihre Anzahl stellen Bearbeitungsmerkmale dar, die mittels Bildanalyse identifiziert werden können.

Ein dritter Bereich (12a, 12b, 12c) weist Linien auf, die sich von links oben nach rechts unten erstrecken und darauf hinweisen, dass dieser Bereich von links oben nach rechts unten und/oder von rechts unten nach links oben entlang der Linien bearbeitet worden ist. Die Linien, ihre Ausrichtung, ihr Abstand voneinander und ihre Anzahl stellen Bearbeitungsmerkmale dar, die mittels Bildanalyse identifiziert werden können. Der dritte Bereich (12a, 12b, 12c) lässt sich in drei Teilbereiche (12a), (12b) und (12c) unterteilen, die durch Fahrgassen (14a, 14b) voneinander getrennt werden. Ferner sind im Grenzbereich zwischen den Bereichen (10) und (12b, 12c) Vorgewende (15) zu erkennen.

Die Lage und Breite der Fahrgassen und Vorgewende stellen Bearbeitungsmerkmale dar, die mittels Bildanalyse identifiziert werden können.

Das in der Satellitenaufnahme teilweise gezeigte Feld wird auf zwei Seiten durch die Zufahrtswege (13a) und (13b) begrenzt. Die Lage und Breite der Zufahrtswege stellen Bearbeitungsmerkmale dar, die mittels Bildanalyse identifiziert werden können.

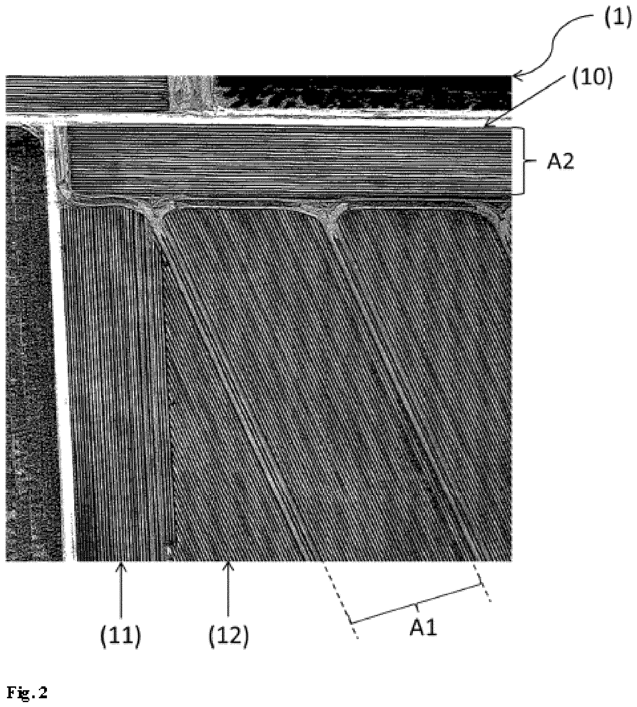

Figur 2 zeigt beispielhaft, für welche Arbeitsparameter Werte aus Bearbeitungsmerkmalen der Figur 1 ermittelt werden können.

Aus den Abständen A1 und A2 lassen sich beispielsweise Werte für die Arbeitsbreite der landwirtschaftlichen Bearbeitungsmaschine ermitteln.

Aus den Breiten von Fahrgassen, Vorgewenden und Zufahrtswegen lassen sich Werte für maximale Spurbreiten der landwirtschaftlichen Bearbeitungsmaschine ermitteln. Aus den Richtungen, in denen die Linien in den Feldbereichen (10), (11) und (12) verlaufen, lassen sich bevorzugte Bearbeitungsrichtungen ermitteln.

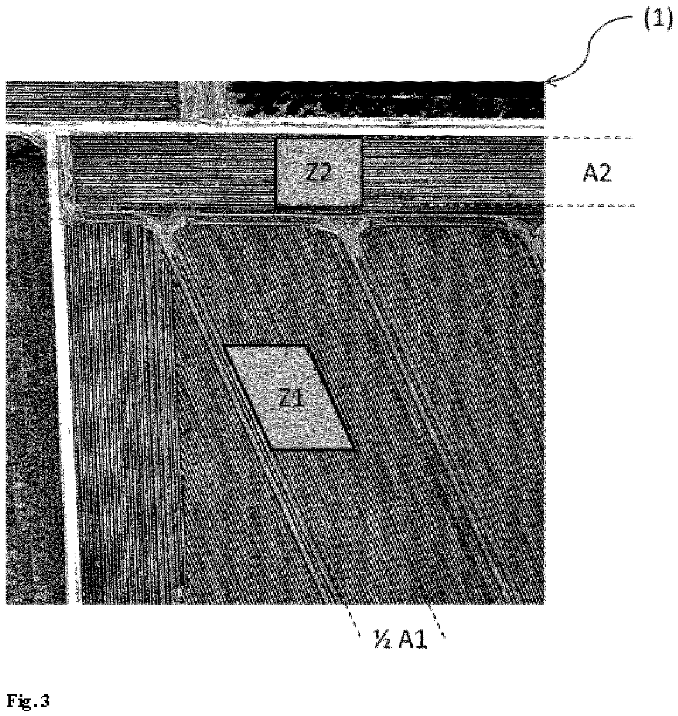

Figur 3 zeigt schematisch die Festlegung von Zonen. In der Karte sind zwei Zonen (Z1) und (Z2) eingezeichnet. Merkmale der Zonen sind an Werte für Arbeitsparameter angepasst. Sie beträgt die Ausdehnung der Zone Z1 in eine Richtung (senkrecht zur Bearbeitungsrichtung) genau der halben Arbeitsbreite A1 und die Ausdehnung der Zone Z2 in einer Richtung (senkrecht zur Bearbeitungsrichtung) genau der Arbeitsbreite A2.

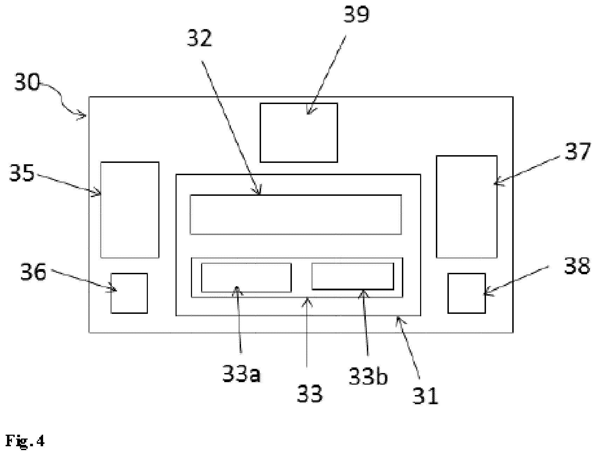

Figur 4 zeigt schematisch ein Beispiel für den Aufbau eines erfindungsgemäßen Computersystems.

Das Computersystem (30) umfasst eine Eingabeeinheit (35), mit der ein Nutzer Daten und Steuerbefehle eingeben kann. Sie umfasst eine Verarbeitungseinheit (31) zum Verarbeiten von Daten und Steuerbefehlen. Die Verarbeitungseinheit (31) weist einen Arbeitsspeicher (32) und einen Prozessor (33) auf. Der Prozessor (33) umfasst ein Steuerwerk (33a) und ein Rechenwerk (33b). Die Computereinheit (30) umfasst ferner eine Ausgabeeinheit (37), mit der Daten ausgegeben werden können. Die Computereinheit (30) umfasst ferner einen Datenspeicher (39), eine Empfangseinheit (36), mit der Signale und/oder Daten von externen Geräten empfangen werden können, und eine Sendeeinheit (39), mit der Signale und/oder Daten an externe Geräte verschickt werden können.

Nachfolgend ist beispielhaft eine Ausführungsform des erfindungsgemäßen Verfahrens beschrieben. Dabei nutzt ein Nutzer das erfindungsgemäße Computersystem, auf dem das erfindungsgemäße Computerprogramm installiert ist.

Das Computersystem stellt dem Nutzer eine digitale Karte zur Verfügung. Mittels eines Eingabegerätes wie einer Maus kann der Netzer den Ausschnitt der Karte ändern und in die Karte hineinzoomen oder aus der Karte herauszoomen, so dass er sich auf der Karte ein bestimmtes Feld anzeigen lassen kann. In der Karte kann der Nutzer beispielsweise durch Einzeichnen von Feldgrenze ein spezielles Feld auswählen. Denkbar ist aber auch, dass Feldgrenzen mittels Bildanalyse automatisch erkannt werden und der Nutzer ein erkanntes Feld beispielsweise durch Anklicken mit der Maus auswählen kann.

Auf Basis des ausgewählten Feldes ruft das Computersystem ein oder mehrere digitale Bildaufnahmen von einer Datenbank beispielsweise über das Internet ab, die das Feld zu einem früheren Zeitpunkt zeigen. Es ist denkbar, dass der Nutzer Zeitpunkte oder eine Zeitspanne in der Vergangenheit, für die er sich besonders interessiert, in das Computersystem eingibt. Es ist denkbar, dass dem Nutzer eine oder mehrere abgerufene Bildaufnahmen angezeigt wird/werden und er diejenige(n) auswählt, auf denen Bearbeitungsmerkmale zu erkennen sind, die zeigen, wie das Feld in der Vergangenheit bearbeitet worden ist und wie es auch in Zukunft bearbeitet werden soll.

Das Computersystem analysiert eine oder mehrere digitale Bildaufnahmen und identifiziert Bearbeitungsmerkmale.

Es ist denkbar, dass das Computersystem die identifizierten Bearbeitungsmerkmale auf dem Bildschirm anzeigt. Es ist denkbar, dass der Nutzer diejenigen Bearbeitungsmerkmale auswählt, auf deren Basis Werte für Arbeitsparameter ermittelt werden sollen.

Das Computersystem ermittelt mindestens einen Wert für mindestens einen Arbeitsparameter aus den Bearbeitungsmerkmalen.

Das Computersystem erstellt eine digitale Bearbeitungskarte für das Feld, wobei die Bearbeitungskarte mehrere Zonen umfasst, wobei mindestens ein Merkmal mindestens einer Zone an den mindestens einen ermittelten Werte für den mindestens einen Arbeitsparameter angepasst ist

Es ist denkbar, dass das Computersystem die digitale Bearbeitungskarte auf dem Bildschirm anzeigt.

Es ist denkbar, dass der Nutzer die digitale Bearbeitungskarte auf ein Steuersystem für eine landwirtschaftliche Bearbeitungsmaschine lädt.

Es ist denkbar, dass der Nutzer eine landwirtschaftliche Maßnahme mit Hilfe der landwirtschaftlichen Bearbeitungsmaschine ausführt, wobei beim Übertritt von einem Bereich des Feldes, mit dem eine Zone in der Bearbeitungskarte korrespondiert, zu einem anderen Bereich des Feldes, mit dem eine andere Zone in der Bearbeitungskarte korrespondiert, mindestens ein Arbeitsparameter der landwirtschaftlichen Bearbeitungsmaschine geändert wird.

Die Erstellung der digitalen Bearbeitungskarte kann beispielsweise als externe Dienstleistung angeboten werden, da sie im Prinzip auf der Basis von Fernerkundung des Feldes, also ohne physische Anwesenheit am Feld, erstellt werden kann. Daher bezieht sich die Erfindung auch auf eine digitale Bearbeitungskarte für die landwirtschaftliche Bearbeitung eines Feldes, die nach dem beschriebenen Verfahren erhalten wurde.

## Patentansprüche

1. Verfahren umfassend die Schritte
- Bereitstellen einer Bildaufnahme eines Feldes für Kulturpflanzen
- Analysieren der Bildaufnahme und Identifizieren von Bearbeitungsmerkmalen, die Aufschluss darüber geben, wie das Feld in der Vergangenheit maschinell bearbeitet worden ist
- Ermitteln von mindestens einem Wert für mindestens einen Arbeitsparameter unter Heranziehung der Bearbeitungsmerkmale
- Erstellen einer digitalen Bearbeitungskarte für das Feld, wobei die Bearbeitungskarte mehrere Zonen umfasst, wobei mindestens ein Merkmal mindestens einer Zone an den mindestens einen ermittelten Wert für den mindestens einen Arbeitsparameter angepasst ist,
wobei mindestens ein Bearbeitungsmerkmal aus der folgenden Liste ausgewählt ist:
Fahrspuren, Fahrgassen, Pflugstreifen, Blühstreifen, Pflanzabstände, und
wobei mindestens ein Arbeitsparameter aus der folgenden Liste ausgewählt ist: Ausbringrate für ein Saatgut oder für ein Pflanzenschutzmittel.

2. Verfahren gemäß Anspruch 1, **dadurch gekennzeichnet, dass** das Analysieren der Bildaufnahme automatisiert mittels computer-implementierter Verfahren zur Bildanalyse erfolgt.

3. Verfahren gemäß einem der Ansprüche 1 oder 2, **dadurch gekennzeichnet, dass** es sich bei der Bildaufnahme um eine Luftaufnahme oder eine Satellitenaufnahme handelt.

4. Verfahren gemäß einem der Ansprüche 1 bis 3, **dadurch gekennzeichnet, dass** mindestens ein weiteres Bearbeitungsmerkmal aus der folgenden Liste ausgewählt ist: Feldgrenzen, Vorgewende, Ackerrandstreifen, Zufahrtswege, Be- und/oder Entwässerungskanäle, Zäune, Begrenzungen und/oder Mittel zum Schutz vor Bodenerosion.

5. Verfahren gemäß einem der Ansprüche 1 bis 4, **dadurch gekennzeichnet, dass** mindestens ein weiteres Bearbeitungsmerkmal eine Änderung der Feuchtigkeit, der Vegetationsdichte oder auch der chemischen Zusammensetzung des Bodens umfasst.

6. Verfahren gemäß einem der Ansprüche 1 bis 5, **dadurch gekennzeichnet, dass** die Ausdehnung mindestens einer Zone senkrecht zu einer Bearbeitungsrichtung ein ganzzahliges Vielfaches der Arbeitsbreite einer landwirtschaftlichen Bearbeitungsmaschine beträgt.

7. Verfahren gemäß einem der Ansprüche 1 bis 6, **dadurch gekennzeichnet, dass** mindestens eine Grenze einer Zone mit mindestens einem Teil einer Grenze einer Fahrgasse übereinstimmt.

8. Verfahren gemäß einem der Ansprüche 1 bis 7, **dadurch gekennzeichnet, dass** zwei parallel zueinander verlaufende Grenzen der mindestens einen Zone parallel zu einer Bearbeitungsrichtung einer landwirtschaftlichen Bearbeitungsmaschine verlaufen.

9. Verfahren gemäß einem der Ansprüche 1 bis 8 umfassend die folgenden Schritte:
- Aufrufen einer digitalen Karte eines Feldes auf einen Bildschirm eines Computersystems durch einen Nutzer
- Abrufen von mindestens einer digitalen Bildaufnahme, die das Feld zu einem früheren Zeitpunkt zeigt, von einer Datenbank auf das Computersystem
- automatische Analyse der Bildaufnahme und Identifizieren von Bearbeitungsmerkmalen, die Aufschluss darüber geben, wie das Feld in der Vergangenheit maschinell bearbeitet worden ist
- Anzeigen von Bearbeitungsmerkmalen auf dem Bildschirm
- Auswahl von angezeigten Bearbeitungsmerkmalen durch den Nutzer
- automatisches Ermitteln von mindestens einem Wert für mindestens einen Arbeitsparameter aus den ausgewählten Bearbeitungsmerkmalen
- automatisches Erstellen einer digitalen Bearbeitungskarte für das Feld, wobei die Bearbeitungskarte mehrere Zonen umfasst, wobei mindestens ein Merkmal mindestens einer Zone an den mindestens einen ermittelten Werte für den mindestens einen Arbeitsparameter angepasst ist
- Anzeigen der digitalen Bearbeitungskarte auf dem Bildschirm
- optionales Laden der digitalen Bearbeitungskarte auf ein Steuersystem für eine landwirtschaftliche Bearbeitungsmaschine
- optionales Ausführen einer landwirtschaftlichen Maßnahme mit Hilfe der landwirtschaftlichen Bearbeitungsmaschine, wobei beim Übertritt von einem Bereich des Feldes, mit dem eine Zone in der Bearbeitungskarte korrespondiert, zu einem anderen Bereich des Feldes, mit dem eine andere Zone in der Bearbeitungskarte korrespondiert, mindestens ein Arbeitsparameter der landwirtschaftlichen Bearbeitungsmaschine geändert wird.

10. Digitale Bearbeitungskarte für die landwirtschaftliche Bearbeitung eines Feldes, erhalten durch ein Verfahren gemäß einem der Ansprüche 1 bis 9.

11. Computersystem umfassend
- eine Empfangseinheit zum Empfang einer Bildaufnahme eines Feldes für Kulturpflanzen und
- eine Verarbeitungseinheit, die so konfiguriert ist, dass sie
o eine Bildaufnahme eines Feldes für Kulturpflanzen analysiert und Bearbeitungsmerkmale identifiziert, die Aufschluss darüber geben, wie das Feld in der Vergangenheit maschinell bearbeitet worden ist,
o unter Heranziehung der Bearbeitungsmerkmale mindestens einen Wert für mindestens einen Arbeitsparameter ermittelt, und
o eine digitale Bearbeitungskarte für das Feld erstellt, wobei die Bearbeitungskarte mehrere Zonen umfasst, wobei mindestens ein Merkmal mindestens einer Zone an den mindestens einen ermittelten Werte für den mindestens einen Arbeitsparameter angepasst ist, wobei mindestens ein Bearbeitungsmerkmal aus der folgenden Liste ausgewählt ist: Fahrspuren, Fahrgassen, Pflugstreifen, Blühstreifen, Pflanzabstände, und
wobei mindestens ein Arbeitsparameter aus der folgenden Liste ausgewählt ist: Ausbringrate für ein Saatgut oder für ein Pflanzenschutzmittel.

12. Computerprogrammprodukt umfassend ein Computerprogramm, das in einen oder mehrere Arbeitsspeicher eines Computersystems geladen werden kann und dort das Computersystem dazu veranlasst, folgende Schritte ausführen:
- Empfangen einer Bildaufnahme eines Feldes für Kulturpflanzen
- Analysieren der Bildaufnahme und Identifizieren von Bearbeitungsmerkmalen, die Aufschluss darüber geben, wie das Feld in der Vergangenheit maschinell bearbeitet worden ist
- Ermitteln von mindestens einem Wert für mindestens einen Arbeitsparameter unter Heranziehung der Bearbeitungsmerkmale
- Erstellen einer digitalen Bearbeitungskarte für das Feld, wobei die Bearbeitungskarte mehrere Zonen umfasst, wobei mindestens ein Merkmal mindestens einer Zone an den mindestens einen ermittelten Werte für den mindestens einen Arbeitsparameter angepasst ist,
wobei mindestens ein Bearbeitungsmerkmal aus der folgenden Liste ausgewählt ist: Fahrspuren, Fahrgassen, Pflugstreifen, Blühstreifen, Pflanzabstände, und
wobei mindestens ein Arbeitsparameter aus der folgenden Liste ausgewählt ist: Ausbringrate für ein Saatgut oder für ein Pflanzenschutzmittel.

## Claims

1. A method comprising the steps of
- providing an image of a field for crop plants
- analyzing the image and identifying cultivation features that give information as to how the field has been cultivated by machine in the past
- ascertaining at least one value for at least one working parameter with reference to the cultivation features
- creating a digital cultivation map for the field, said cultivation map comprising multiple zones, with at least one feature of at least one zone matched to the at least one value ascertained for the at least one working parameter,
wherein at least one cultivation feature is selected from the following list:
driving tracks, driving lanes, ploughing strips, flower strips, plant separations,
and
wherein at least one working parameter is selected from the following list: deployment rate for a seed or for a plant protection agent.

2. The method according to claim 1, **characterized in that** the image is analyzed in an automated manner by means of computer-implemented methods of image analysis.

3. The method according to either of claims 1 and 2, **characterized in that** the image is an aerial image or a satellite image.

4. The method according to any of claims 1 to 3, **characterized in that** at least one further cultivation feature is selected from the following list: field boundaries, headlands, field margins, access routes, irrigation and/or drainage channels, fences, demarcations and/or means of protection from soil erosion.

5. The method according to any of claims 1 to 4, **characterized in that** at least one further cultivation feature comprises a change in the moisture, vegetation density or else chemical composition of the soil.

6. The method according to any of claims 1 to 5, **characterized in that** the extent of at least one zone at right angles to a cultivation direction is a whole multiple of the working width of an agricultural cultivation machine.

7. The method according to any of claims 1 to 6, **characterized in that** at least one boundary of a zone coincides with at least part of a boundary of a driving lane.

8. The method according to any of claims 1 to 7, **characterized in that** two boundaries of the at least one zone that run parallel to one another run parallel to a cultivation direction of an agricultural cultivation machine.

9. The method according to any of claims 1 to 8, comprising the following steps:
- calling up a digital map of a field to a screen of a computer system by a user
- retrieving at least one digital image showing the field at an earlier time from a database on the computer system
- automatically analyzing the image and identifying cultivation features that give information as to how the field has been cultivated by machine in the past
- displaying cultivation features on the screen
- selecting displayed cultivation features by the user
- automatically ascertaining at least one value for at least one working parameter from the selected cultivation features
- automatically creating a digital cultivation map for the field, said cultivation map comprising multiple zones, with at least one feature of at least one zone matched to the at least one value ascertained for the at least one working parameter
- displaying the digital cultivation map on the screen
- optionally loading the digital cultivation map to a control system for an agricultural cultivation machine
- optionally executing an agricultural measure with the aid of the agricultural cultivation machine, with a change in at least one working parameter of the agricultural cultivation machine when passing from a region of the field corresponding to one zone in the cultivation map to another region of the field corresponding to another zone in the cultivation map.

10. A digital cultivation map for the agricultural cultivation of a field, obtained by a method according to any of claims 1 to 9.

11. A computer system comprising
- a receiving unit for receiving an image of a field for crop plants and
- a processing unit configured so as to
o analyze an image of a field for crop plants and identify cultivation features that give information as to how the field has been cultivated by machine in the past,
o ascertain at least one value for at least one working parameter with reference to the cultivation features, and
o create a digital cultivation map for the field, said cultivation map comprising multiple zones, with at least one feature of at least one zone matched to the at least one value ascertained for the at least one working parameter,
wherein at least one cultivation feature is selected from the following list:
driving tracks, driving lanes, ploughing strips, flower strips, plant separations,
and
wherein at least one working parameter is selected from the following list: deployment rate for a seed or for a plant protection agent.

12. A computer program product comprising a computer program which can be loaded into one or more working memories of a computer system and therein causes the computer system to execute the following steps:
- receiving an image of a field for crop plants
- analyzing the image and identifying cultivation features that give information as to how the field has been cultivated by machine in the past
- ascertaining at least one value for at least one working parameter with reference to the cultivation features
- creating a digital cultivation map for the field, said cultivation map comprising multiple zones, with at least one feature of at least one zone matched to the at least one value ascertained for the at least one working parameter,
wherein at least one cultivation feature is selected from the following list:
driving tracks, driving lanes, ploughing strips, flower strips, plant separations,
and
wherein at least one working parameter is selected from the following list: deployment rate for a seed or for a plant protection agent.

## Revendications

1. Procédé comprenant les étapes suivantes
- fournir une capture d'image d'un champ destiné à des plantes de culture,
- analyser la capture d'image et identifier des caractéristiques de traitement qui donnent un aperçu de la façon dont le champ a été traité mécaniquement dans le passé,
- déterminer au moins une valeur d'au moins un paramètre de travail à l'aide des caractéristiques de traitement,
- créer une carte de traitement numérique du champ, la carte de traitement comprenant plusieurs zones, au moins une caractéristique d'au moins une zone étant adaptée à l'au moins une valeur déterminée de l'au moins un paramètre de travail,
au moins une caractéristique de traitement étant sélectionnée dans la liste suivante :
traces de roulement, voies de roulement, bandes labourées, bandes fleuries, espacements des plantes,
et
au moins un paramètre de travail étant sélectionné dans la liste suivante : dose d'épandage d'une semence ou d'un produit phytosanitaire.

2. Procédé selon la revendication 1, **caractérisé en ce que** l'analyse de la capture d'image est effectuée automatiquement à l'aide de procédés informatisés d'analyse d'image.

3. Procédé selon la revendication 1 ou 2, **caractérisé en ce que** la capture d'image est une photographie aérienne ou une photographie par satellite.

4. Procédé selon l'une des revendications 1 à 3, **caractérisé en ce qu'**au moins une autre caractéristique de traitement est sélectionnée dans la liste suivante : limites de champs, tournières, bordures de champs, voies d'accès, canaux d'irrigation et/ou de drainage, clôtures, délimiteurs et/ou moyens de protection contre l'érosion du sol.

5. Procédé selon l'une des revendications 1 à 4, **caractérisé en ce qu'**au moins une autre caractéristique de traitement comprend une variation d'humidité, de densité de végétation ou de composition chimique du sol.

6. Procédé selon l'une des revendications 1 à 5, **caractérisé en ce que** l'étendue d'au moins une zone perpendiculairement à une direction de traitement est un multiple entier de la largeur de travail d'une machine de traitement agricole.

7. Procédé selon l'une des revendications 1 à 6, **caractérisé en ce qu'**au moins une limite d'une zone coïncide avec au moins une partie d'une limite d'une voie de roulement.

8. Procédé selon l'une des revendications 1 à 7, **caractérisé en ce que** deux limites parallèles entre elles de l'au moins une zone s'étendent parallèlement à une direction de traitement d'une machine de traitement agricole.

9. Procédé selon l'une des revendications 1 à 8 comprenant les étapes suivantes :
- appeler, par le biais d'un utilisateur, une carte numérique d'un champ sur un écran d'un système informatique,
- extraire au moins une capture d'image numérique, qui montre le champ à un instant antérieur, d'une base de données sur le système informatique,
- analyser automatiquement la capture d'image et identifier les caractéristiques de traitement qui donnent un aperçu de la façon dont le champ a été traité dans le passé,
- afficher les caractéristiques de traitement sur l'écran,
- sélectionner, par le biais de l'utilisateur, des caractéristiques de traitement affichées,
- déterminer automatiquement au moins une valeur d'au moins un paramètre de travail à partir des caractéristiques de traitement sélectionnées,
- créer automatiquement une carte de traitement numérique du champ, la carte de traitement comprenant plusieurs zones, au moins une caractéristique d'au moins une zone étant adaptée à l'au moins une valeur déterminée de l'au moins un paramètre de travail,
- afficher la carte de traitement numérique sur l'écran,
- charger facultativement la carte de traitement numérique sur un système de commande d'une machine de traitement agricole,
- exécuter facultativement une mesure agricole à l'aide de la machine de traitement agricole, au moins un paramètre de travail de la machine de traitement agricole étant modifié lors du passage d'une zone du champ, à laquelle correspond une zone de la carte de traitement, à une autre zone du champ à laquelle correspond une autre zone de la carte de traitement.

10. Carte de traitement numérique destinée au traitement agricole d'un champ et obtenue par un procédé selon l'une des revendications 1 à 9.

11. Système informatique comprenant
- une unité de réception destinée à recevoir une capture d'image d'un champ destiné à des plantes de culture et
- une unité de traitement qui est configurée pour
○ analyser une capture d'image d'un champ destiné à des plantes de culture et identifier des caractéristiques de traitement qui donnent un aperçu de la façon dont le champ a été traité dans le passé,
○ déterminer au moins une valeur d'au moins un paramètre de travail à l'aide des caractéristiques de traitement, et
○ créer une carte de traitement du champ, la carte de traitement comprenant plusieurs zones, au moins une caractéristique d'au moins une zone étant adaptée à l'au moins une valeur déterminée de l'au moins un paramètre de travail,
au moins une caractéristique de traitement étant sélectionnée dans la liste suivante :
traces de roulement, voies de roulement, bandes labourées, bandes fleuries, espacements des plantes,
et
au moins un paramètre de travail étant sélectionné dans la liste suivante : dose d'épandage d'une semence ou d'un produit phytosanitaire.

12. Progiciel comprenant un programme informatique qui peut être chargé dans une ou plusieurs mémoires de travail d'un système informatique et qui ordonne au système informatique d'exécuter les étapes suivantes :
- recevoir une capture d'image d'un champ destiné à des plantes de culture,
- analyser la capture d'image et identifier des caractéristiques de traitement qui donnent un aperçu de la façon dont le champ a été traité mécaniquement dans le passé,
- déterminer au moins une valeur d'au moins un paramètre de travail à l'aide des caractéristiques de traitement,
- créer une carte de traitement numérique du champ, la carte de traitement comprenant plusieurs zones, au moins une caractéristique d'au moins une zone étant adaptée à l'au moins une valeur déterminée de l'au moins un paramètre de travail,
au moins une caractéristique de traitement étant sélectionnée dans la liste suivante :
traces de roulement, voies de roulement, bandes labourées, bandes fleuries, espacements des plantes,
et
au moins un paramètre de travail étant sélectionné dans la liste suivante : dose d'épandage d'une semence ou d'un produit phytosanitaire.
